# EUROPÄISCHE PATENTSCHRIFT

(11) **EP 1 816 387 B1**
(45) Veröffentlichungstag und Bekanntmachung des Hinweises auf die Patenterteilung: **07.10.2009**
(21) Anmeldenummer: 07002263.7
(22) Anmeldetag: 02.02.2007
(51) Int. Cl.: F16L 55/168, B29C 65/00, F16L 47/03, F16L 47/32, B29C 65/34

(54) **Mehrlagiges Kunststoffbauteil und Verfahren zum Montieren mehrlagiger Kunststoffbauteile**
Multilayered plastic component and method for mounting multilayered plastic components
Composant plastique multicouche et procédé de montage de composants plastiques multicouches

(30) Priorität: 03.02.2006 DE 102006004893
(43) Veröffentlichungstag der Anmeldung: 08.08.2007
(73) Patentinhaber: Friatec Aktiengesellschaft, 68229 Mannheim (DE)
(72) Erfinder: Maier, Fabian, 67368 Westheim (DE)
(74) Vertreter: Tönhardt, Marion

(56) Entgegenhaltungen:
- EP-A- 0 622 171
- JP-A- 3 071 824

## Beschreibung

Die Erfindung betrifft ein mehrlagiges Kunststoffbauteil zum Verstärken von Kunststoffunterbauten, beispielsweise Rohrleitungen, Behältern und dergleichen, die durch besondere Belastungen der Gefahr der Deformierung oder Zerstörung ausgesetzt sind oder die sogar bereits durch Risse oder Kerben beschädigt sind. Besonders belastete Bereiche an Kunststoffunterbauten sind Anschlußstellen für Funktionsteile, wie Abgangsrohre oder Halterungen, wo erfahrungsgemäß der Kunststoffunterbau wegen der auftretenden Belastungen geschwächt und unerwünscht deformiert wird. Die Erfindung betrifft weiterhin Verfahren zum Montieren eines mehrlagigen Kunststoffbauteils, insbesondere im Zusammenhang mit dem Anbringen eines Abzweigsattels und von Reparaturflicken, die auch größere Ausbrüche, beispielsweise Mannlöcher, überdecken können.

Sattelbauteile werden in technischen Rohrleitungssystemen zum druckdichten Anschließen von abzweigenden Rohrverbindungen und zum Anbringen von Funktionsteilen eingesetzt. Derartige Sattelbauteile haben in der Regel annähernd gleiche Wandstärken sowohl bei einem etwa vorgesehenen Abgangsrohr als auch beim sattelartigen Auflagebereich; die gewählte Dicke entspricht dabei den Anforderungen bezüglich Druckstufe und Rohrdimension an das Rohr. Solche Auflagebereiche verdicken entsprechend die Außenwand einer Hauptrohrverbindung und ermöglichen auf diese Weise eine belastbare Verbindung. Das Prinzip ist aus dem Apparatebau bekannt, hier wird ein Verstärkungsbund aufgebracht, wenn eine Strukturschwächung durch einen Ausbruch bzw. einen Abzweig auszugleichen ist. Die Abmessung des Verstärkungsbundes richtet sich dabei nach Druckstufe und Größe des Ausbruchs.

Durch die im Laufe der Zeit beträchtlich an Umfang zunehmenden Großrohrverbindungen werden die an die Rohrdicke angepaßten Satteldicken im Zusammenhang mit geringen Weiten des Abgangsrohres immer problematischer, da auch in solchen Fällen deren sattelartiger Auflagebereiche immer massiver werden müssen. Durch die massive Bauart der Sattelfläche und die daraus resultierende Inflexibilität des Sattels ist die Erzeugung eines definierten Fügespaltes nur mit erheblichem Aufwand möglich, da gerade bei großen Nennweiten technische Probleme, wie Unrundungen oder Abplattungen, sowohl bei der Herstellung der Rohrsysteme als auch im Betrieb der fertigen Rohrsysteme auftreten können.

Das Abdecken von Beschädigungen bestehender und nicht ohne weiteres auswechselbarer Rohrleitungen durch Reparaturflicken ist ebenfalls seit längerem bekannt. Der Anwendungsbereich einlagiger Flicken ist allerdings im Hinblick auf Druckbeständigkeit und Belastbarkeit der Flickstellen einerseits und erforderliche Anpassungsfähigkeit des Flickens andererseits eingeschränkt.

Ein Sattelbauteil mit einem Abgangsrohr ist beispielsweise aus der DE 202 18 378 U1 bekannt. In die Sattelfläche ist eine Heizwendel aus Kupfer mit aufrecht stehender Wicklung mit einer Schmelztiefe, die etwa der Drahtstärke entspricht, eingeschmolzen. Vorzugsweise ist in der Heizwendel eine Kunststoffseele angeordnet, so daß bei Zuführen elektrischer Energie in die Heizwendel nicht nur das aufgespannte Sattelbauteil und der anliegende Bereich der Rohrleitung verschmolzen werden, sondern auch die Kunststoffseele aufschmilzt und somit eine Schweißzone ohne Freiräume ausbildet, wobei die Schweißzone gleichzeitig abdichtet und ausreichend mechanischen Halt gibt, auch wenn das Sattelbauteil und die bestehende Rohrleitung bezüglich ihrer Krümmungsradien nicht genau zueinander passen. Allerdings kann mit zunehmender Dicke des Auflagebereichs das erforderliche Biegemoment nicht mehr durch die mechanische Stabilität der Schweißzone aufgefangen werden.

Formteile flächig mittels einem oder mehreren Heizdrähten zu verschweißen, ist auch aus der EP 0 622 171 A1 bekannt.

Ein mehrlagiges Kunststoffbauteil, bestehend aus einer ringförmigen Schmelzverbindungsscheibe und einem ringförmigen Flansch, ist aus der JP 2-073948 C bekannt. Ein Abgangsrohr wird mit seinem äußeren Wanddurchmesser in eine Öffnung gleichen Durchmessers einer Hauptrohrverbindung aus Polyethylen eingeschoben, die Schmelzverbindungsscheibe und der Flansch werden auf das Abgangsrohr aufgesetzt, schließlich wird im Winkel zwischen Flansch und Abgangsrohr ein mit Niederdruck-Polyethylen ummantelter Draht angeordnet. Durch Anlegen einer Spannung sowohl an den Draht als auch an die Schmelzverbindungsscheibe werden einerseits der Flansch mit dem Hauptrohr und andererseits das Abgangsrohr mit dem Flansch verschmolzen. Da der Flansch im wesentlichen die gleiche Stärke hat wie das Abgangsrohr, stellen sich die oben diskutierten Probleme bezüglich der Anpaßbarkeit an unterschiedliche Druckstufen erneut.

Es ist daher die Aufgabe der Erfindung, ein mehrlagiges Kunststoffbauteil zur Verfügung zu stellen, welches für möglichst unterschiedliche Krümmungen von Kunststoffunterbauten einsetzbar ist und das andererseits an unterschiedliche Drücke und mechanische Belastungen anpaßbar ist, sowie ein Verfahren zum Montieren eines mehrlagigen Kunststoffbauteils bereitszustellen.

Die Aufgabe wird durch ein mehrlagiges Kunststoffbauteil mit den Merkmalen des Anspruchs 1 sowie durch ein Verfahren zum Montieren eines mehrlagigen Kunststoffbauteils mit den Merkmalen des Anspruchs 15 gelöst. Vorteilhafte Weiterbildungen ergeben sich aus den jeweils rückbezogenen Unteransprüchen.

Erfindungsgemäß weist das mehrlagige Kunststoffbauteil als Lagen mindestens zwei Verstärkungspakete auf, die jeweils aus einer Heizmatte und einer auf dieser liegenden Verstärkungsmatte bestehen, die verschweißt im Verbund miteinander oder mit einem Kunststoffunterbau stabilisiert sind, wobei sämtliche Lagen für sich jeweils flexibel sind.

"Flexibel" heißt dabei, daß jede Lage so nachgiebig ist, daß sie ohne oder nur mit geringem Kraftaufwand an unterschiedliche Krümmungsradien bei einem Kunststoffunterbau anpaßbar ist. Dabei kann die Lage durchaus selbständig formstabil sein und aus relativ dünnen, halbsteifen Platten bestehen, die aber bei normalerweise auftretenden Aufspanndrücken, die im Bereich von -0,1 bis 2 N/mm² liegen, elastisch bzw. plastisch verformt werden können.

Beim Aufbau eines erfindungsgemäßen mehrlagigen Kunststoffbauteils können so viele Verstärkungspakete wie gewünscht oder nötig aufeinander gelegt und gleichzeitig oder nacheinander verschweißt werden.

Dazu ist die Heizmatte mit einer an ihren beiden Oberflächen wirkenden Heizeinrichtung versehen. Dann nämlich kann die Heizmatte so ausgelegt werden, daß sie für das Verschweißen optimiert ist, das heißt also, ein standardisiertes Bauteil sein.

Oftmals kann es nötig sein, einen Ausbruch in einem Kunststoffunterbau zu schließen. Um dann auch mit Verstärkungspaketen arbeiten zu können, ist vorteilhaft zumindest eine der Lagen eine Auflagematte mit au einer ihrer Oberflächen wirkenden Heizeinrichtung. Diese wird dann zunächst mit dem Kunststoffunterbaw verschmolzen, bevor weitere Verstärkungspakete aufgelegt werden.

Obwohl daran gedacht werden kann, die Verstärkungsmatten, Heizmatten oder Auflagematten durch Laserschweißen, Ultraschallschweißen oder Hochfrequenzschweißen miteinander oder mit dem Kunststoffunterbau zu verbinden, ist es bevorzugt, wenn die Heizeinrichtung elektrisch oder induktiv beaufschlagbar ist

Die Heizeinrichtung kann dabei ein Heizelement oder ein Heizdraht sein, die für die übliche Elektroschweißtechnik oder Heizwendelschweißtechnik ausgelegt sind. Als Alternative kann die Heizeinrichtung ein elektrisch leitfähiges thermoplastisches Material sein, dessen Leitfähigkeit so optimiert ist, daß Heizung durch Induktion möglich ist.

Vom Gesichtspunkt einfacher Herstellung und kostengünstiger Logistik her wird danach getrachtet werden, möglichst nur eine Art von Heizmatten, eine Art von Verstärkungsplatten und eine Art von Auflageplatten bereitzustellen. Jedoch kann vorgesehen sein, daß die Abmessungen der Lagen auch in höheren bzw. dickeren Stapeln aneinander angeglichen sind.

Nach einer bevorzugten Ausführungsform kann vorgesehen sein, daß die Dicke mindestens einer der Lagen von der Mitte ausgehend nach außen abnimmt. Dies hat den Vorteil, daß die Lagen nach außen hin, wo oftmals durch die Anpassung an den Rohrdurchmesser größere Biegespannungen vorliegen, flexibler sind, während gleichzeitig die Stabilität im stärker belasteten Innenbereich gewährleistet wird. Auch können Lagen unterschiedlicher Dicke verwendet werden.

Insbesondere bei der Verwendung im Zusammenhang mit einem Sattelbauteil ist es vorteilhaft, wenn jede der Lagen einen Durchbruch aufweist. Durch diesen Durchbruch ragt dann das Funktionsteil, im Fall eines Abzweigsattels das Abgangsrohr, in anderen Fällen Haken, Ösen oder dergleichen.

Um den Schweißprozeß zu begünstigen, ist es zweckmäßig, wenn die Lagen aus thermoplastischem Material, vorzugsweise Polyethylen oder Polypropylen, hergestellt sind.

Neben der Anwendung als Reparaturflicken ist es auch denkbar, daß das mehrlagige Kunststoffbauteil gemäß der Erfindung als eine Bandage oder Klammer um den Kunststoffunterbau angeordnet ist. Reparaturen und Belastungsausgleiche sind dann möglich, ohne daß beispielsweise ein Rohr ausgebaut werden muß. Auch können Kunststoffbehälter, beispielsweise Tanks für Chemikalien, an besonders belasteten Bereichen verstärkt oder gar repariert werden, ohne daß der Tankinhalt abgelassen werden müßte, da in der Regel sogar durch die schlechte Wärmeleitung des Kunststoffs gewährleistet ist, daß die beim Verschweißen der Lagen entstehende Wärme nicht in das Tankinnere gelangt.

Nach einer Ausgestaltung ist eine Auflagematte als Auflagefläche eines Sattelbauteils ausgebildet ist. Mehrlagige Kunststoffbauteile gemäß der vorliegenden Erfindung erlauben so in Verbindung mit Sattelbauteilen druckfeste Verbindungen beispielsweise zwischen einem Abgangsrohr und einer Rohrleitung in einem vergrößerten Bereich an Nennweiten und Abgangsdurchmessern, als dies Sattelbauteile nach dem Stand der Technik könnten. Die als Auflagefläche ausgestalteten Auflagematten und die aus Heizmatte und Verstärkungsmatte bestehenden Verstärkungspakete entsprechen in ihrer Kombination den Anforderungen an Flexibilität und ausreichender Stabilität der Anschlußstelle.

Es kann durchaus vorgesehen sein, daß der Außendurchmesser eines Verstärkungspakets oder mehrerer Verstärkungspakete größer ist als der Außendurchmesser der Auflagefläche des Abzweigsattels. Damit kann eine vergrößerte Schweißzone zum Rohr geschaffen werden.

Gelegentlich kann es vorteilhaft sein, wenn das Sattelbauteil ein Abzweigsattel ist, dessen Abgangsrohr über den Ansatz der Auflagefläche hinaus verlängert ist. Dieses bietet eine Justierhilfe zum Aufsetzen des Abzweigsattels, wenn beispielsweise ein beschädigtes Teil ersetzt werden soll.

Es versteht sich, daß bezüglich der Geometrie der Matten keinerlei Einschränkungen bestehen. Die Matten können kreisförmig sein, elliptisch, polygonal, rautenförmig, ebenso können die Durchbrüche kreisförmig, oval, polygonal, beispielsweise quadratisch oder rechteckig und dergleichen sein.

Ein Verfahren zum Montieren eines mehrlagigen Kunststoffbauteils nach Anspruch 1 weist die Schritte auf:
- Aufspannen mindestens eines Verstärkungspakets bestehend aus zwei für sich jeweils flexiblen Lagen auf einen Kunststoffunterbau;
- Verschweißen der Lagen miteinander und mit dem Kunststoffunterbau,
wobei jedes Verstärkungspaket aus einer Heizmatte und einer Verstärkungsmatte bestehent und wobei auf das bereits auf dem Kunststoffunterbau verschweißte Verstärkungspaket ein oder mehrere weitere Verstärkungspakete aufgespanntund verschweißt werden. Auch das gleichzeitige Verschweißen mehrerer oder aller Verstärkungspakete ist möglich.

Vor dem Aufspannen des ersten Verstärkungspakets können nach einer Ausgestaltung der Erfindung folgende Schritte ausgeführt werden:
- optional Ausfräsen eines Loches vorbestimmten Durchmessers in den Kunststoffunterbau;
- Aufspannen eines Sattelbauteils auf den Kunststoffunterbau;
- Verschweißen der Auflagefläche des Sattelbauteils mit dem Kunststoffunterbau;
- Aufstecken eines Verstärkungspakets auf das auf dem Kunststoffunterbau verschweißte Sattelbauteil.

Ebenso können vor dem Aufspannen des Verstärkungspakets folgende Schritte ausgeführt werden:
- Aufspannen einer Auflagematte auf einen Kunststoffunterbau;
- Verschweißen der Auflagematte mit dem Kunststoffunterbau;
- woraufhin das Verstärkungspaket zumindest mit der Auflagematte verschweißt wird.

Zum Aufspannen wird vorteilhaft ein Druckkissen, ein Spanngurt oder Vakuum verwendet. Beispiele für das Aufspannen mittels Vakuum gibt die DE 103 10 876 A1. Dabei wird das zu verschweißende Bauteil beispielsweise mit einer Vakuumglocke verschlossen, wobei im Auflagebereich des Bauteils zum Unterbau hin Dichtelemente vorgesehen sind. Unter ständigem Evakuieren wird anschließend das Bauteil mit dem Körper verschweißt. Es kann als Aufspannhilfe eine Justierbohrung verwendet werden. Die Arbeitsabläufe werden vereinfacht, wenn beim Aufspannen das Sattelbauteil als Gegenlager dient.

Das Prinzip der Erfindung besteht darin, die Anforderungen an Stabilität und Druckbeständigkeit auf mehrere Komponenten des mehrlagigen Kunststoffbauteils, wie Auflagematten, Heizmatten und Verstärkungsmatten, zu verteilen, wobei während des Montierens die Flexibilität der einzelnen Komponenten zunächst erhalten bleibt. Während Flexibilität durch den Sandwichaufbau mehrerer jeweils dünner Lagen erzielt wird, ist eine anschließend ausreichende Stabilität durch die verschweißten Komponenten gegeben.

Weitere Einzelheiten der vorliegenden Erfindung werden anhand der Zeichnung, die Ausführungsformen eines Abzweigsattels und eines Reparaturflickens darstellen, beispielhaft erläutert. Im einzelnen zeigt:
- Figur 1: einen Abzweigsattel;
- Figur 2: einen auf eine Rohrleitung aufgesetzten Abzweigsattel;
- Figur 3: ein auf ein Abgangsrohr eines Abzweigsattels aufgestecktes Heizelement;
- Figur 4: eine über ein Heizelement auf einen Abzweigsattel aufgesteckte Verstärkungsmatte;
- Figur 5: ein auf einen Abzweigsattel aufgestecktes Verstärkungspaket;
- Figur 6: eine Teilschnittansicht der Anordnung aus Figur 5;
- Figur 7: ein auf einer Rohrleitung verschweißtes Abzweigsattel mit ebenfalls verschweißtem Verstärkungspaket;
- Figur 8: eine Teilschnittansicht der Anordnung aus Figur 7;
- Figur 9: einen auf einer Rohrleitung verschweißten Flicken, bestehend aus zwei Heizmatten und zwei Verstärkungsmatten;
- Figur 10: eine Auflagematte;
- Figur 11: einen Reparaturflicken, bestehend aus vier Lagen mit unterschiedlicher Dicke;
- Figur 12: eine Darstellung der Figur 11 in Querschnittsansicht;
- Figur 13: verschiedene Formgebungen der einzelnen Heizmatten, Verstärkungsmatten bzw. Auflagematten;
- Figur 14: verschiedene Formgebungen der Heizmatten, Verstärkungsmatten bzw. Auflagematten mit Durchbrüchen;
- Figur 15: einen bandagenförmigen Reparaturflicken.

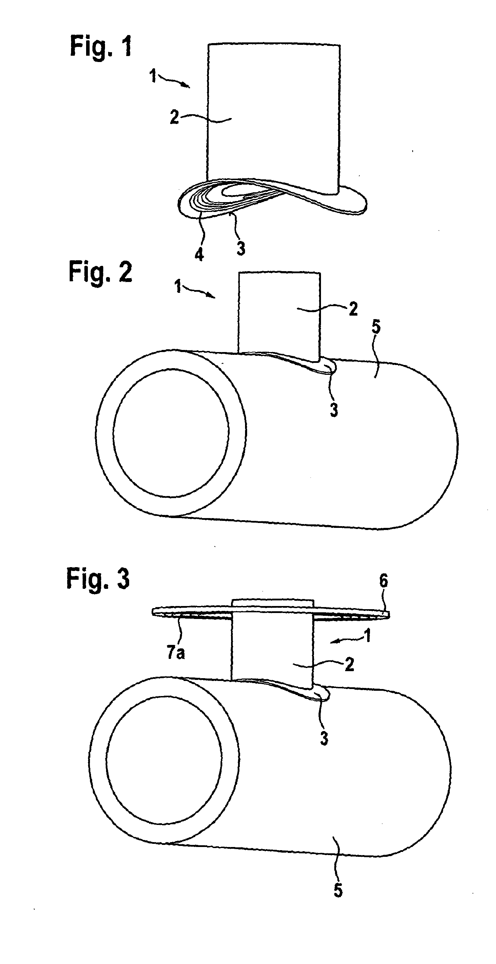

In Figur 1 ist ein Abzweigsattel 1, bestehend aus einem Abgangsrohr 2 und einer Auflagefläche 3, dargestellt. An der Unterseite der Auflagefläche 3 ist ein spiralig gelegter Heizdraht 4 zum späteren Verschmelzen der Auflagefläche 3 des Abzweigsattels 1 mit einer Rohrleitung (hier nicht dargestellt), insbesondere einer Hauptrohrleitung, angeordnet. Der zur beabsichtigten Verbindung der Rohrleitung zugewandte Bereich des Abgangsrohres 2 geschnitten, die Auflagefläche 3 ist flexibel und kann sich dem Rohrumfang anpassen.

Figur 2 zeigt den auf eine Rohrleitung 5 aufgesetzten und nach dem Aufspannen verschweißten Abzweigsattel 1. Während das Abgangsrohr 2 des Abzweigsattels 1 von der Rohrleitung 5 wegzeigt, liegt die Auflagefläche 3 des Abzweigsattels 1 aufgrund ihrer Wölbung nach dem Aufspannen wegen der Flexibilität der Auflagefläche 3 formschlüssig auf der Rohrleitung 5 auf. Nach dem Aufspannen des Abzweigsattels 1 auf die Rohrleitung 5 wird dem Heizdraht (hier nicht dargestellt) an der Unterseite der Auflagefläche 3 des Abzweigsattels 1 elektrische Energie zugeführt, um die Auflagefläche 3 des Abzweigsattels 1 mit der Rohrleitung 5 zu verschmelzen.

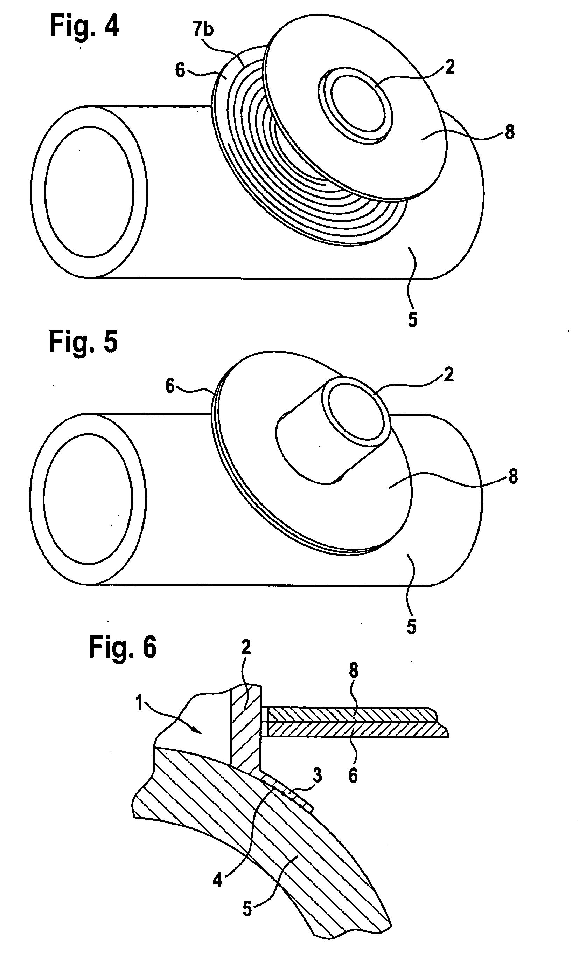

In Figur 3 ist der Abzweigsattel 1 bereits mit der Rohrleitung 5 verschweißt. Als nächster Schritt zur zusätzlichen Verstärkung der neu hergestellten Rohrverbindung wird eine Heizmatte 6 über das Abgangsrohr 2 des Abzweigsattels 1 geschoben. Dabei befindet sich ein Heizdraht 7a an der Unterseite der Heizmatte 6, d. h. der zur Auflagefläche 3 des Abzweigsattels 1 bzw. der Rohrleitung 5 zugewandten Seite, und ein weiterer Heizdraht (hier nicht dargestellt) an der Oberseite der Heizmatte 6, d. h. der zu einer hier nicht dargestellten Verstärkungsplatte zugewandten Seite. Zur Vereinfachung werden diese Heizdrähte im folgenden als unterer Heizdraht 7a bzw. als oberer Heizdraht (7b in Figur 5) bezeichnet.

In Figur 4 ist zu sehen, wie zusätzlich eine Verstärkungsmatte 8 über das Abgangsrohr 2 gelegt wird, so daß sie auf dem oberen Heizdraht 7b der Heizmatte 6 zu liegen kommt, wie es in Figur 5 gezeigt ist.

Figur 6 zeigt die Anordnung der Figur 5 in einer Teilschnittsansicht. Der Abzweigsattel 1 sitzt mit seiner Auflagefläche 3 auf der Rohrleitung 5 und ist mit Hilfe des Heizdrahtes 4 unter Ausbildung einer Schweißzone 9 mit der Rohrleitung 5 verschweißt. Direkt um das Abgangsrohr 2 des Abzweigsattels 1 herum befindet sich das noch nicht aufgespannte Verstärkungspaket, bestehend aus der Heizmatte 6 sowie der Verstärkungsmatte 8. Es ist deutlich zu erkennen, daß die Dicke der Auflagefläche 3 deutlich geringer ist als die Wanddicke des Abgangsrohres 2.

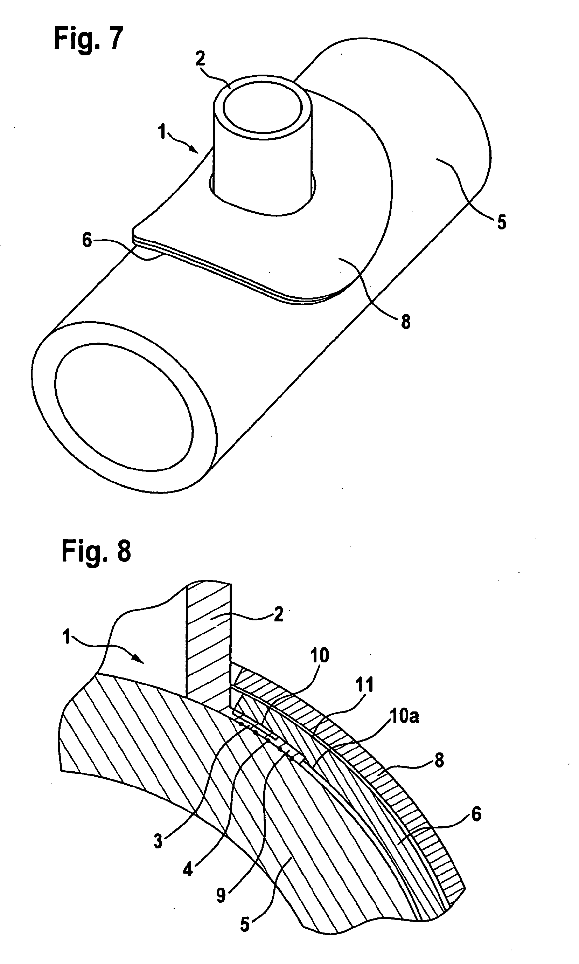

Figur 7 zeigt den auf die Rohrleitung 5 aufgeschweißten Abzweigsattel 1, von dem nur der Abgangsrohr 2 zu sehen ist. Das aus einer Heizmatte 6 und einer Verstärkungsmatte 8 bestehende Verstärkungspaket wurde nach dem Aufspannen ebenfalls mit der Rohrleitung 5 verschweißt.

Figur 8 zeigt eine Teilschnittsansicht der Anordnung aus Figur 7. Der aus Auflagefläche 3 und Abgangsrohr 2 bestehende Abzweigsattel 1 ist mittels des Heizdrahtes 4 unter Ausbildung einer Schweißzone 9 mit der Rohrleitung 5 verschweißt. Das Verstärkungspaket 6, 8 ist ebenfalls mit der Auflagefläche 3 und wegen des gegenüber der Auflagefläche 3 vergrößerten Durchmesser des Verstärkungspaketes 6, 8 auch mit der Rohrleitung 5 verschweißt. Das Verschweißen des Verstärkuugspakets mit der Rohrleitung 5 bzw. mit der Auflagefläche 3 des Abzweigsattels 1 geschieht durch Zuführen von elektrischer Energie in die beiden Heizdrähte (hier nicht dargestellt) der Heizmatte 6, wobei der untere Heizdraht eine Schweißzone 10 zwischen der Heizmatte 6 mit der Auflagefläche 3 des Abzweigsattels 1 mit seinem inneren Teil und eine Schweißzone 10a direkt zwischen der Heizmatte 6 und der Rohrleitung 5 mit seinem äußeren Teil ausbildet. Der obere Heizdraht (hier nicht dargestellt) der Heizmatte 6 bewirkt unter Zuführung von elektrischer Energie ein Verschweißen der Heizmatte 6 mit der Verstärkungsmatte 8 unter Ausbildung der Schweißzone 11. Diese Abbildung veranschaulicht ebenfalls, daß das erforderliche Biegemoment bei der Montage einer sandwichartigen Struktur des Verstärkungspakets gegenüber einem massiven Verstärkungsring bzw. einem massiven Auflagebereichs des Abzweigsattels 1 selbst deutlich verringert ist, da ein Abgleiten der Lagen zueinander möglich ist und die Bauteilhöhe in der dritten Potenz in das Biegemoment eingeht.

Nach dem Aufbringen und Verschweißen eines ersten Verstärkungspakets werden nach dem gleichen Verfahren weitere Verstärkungspakete je nach gewünschter Druckstufe und Rohrdimension auf die bestehende Rohrabzweigung aufgebracht und mit dieser durch Schweißen verbunden. Darüber hinaus können auch mehrere Heizmatten 6 und Verstärkungsmatten 8 übereinander gestapelt werden. Die Abmessungen der gestapelten Lagen können auch größer sein als die Abmessungen tiefer liegender Lagen, um weitere überlappende Schweißzonen auszubilden.

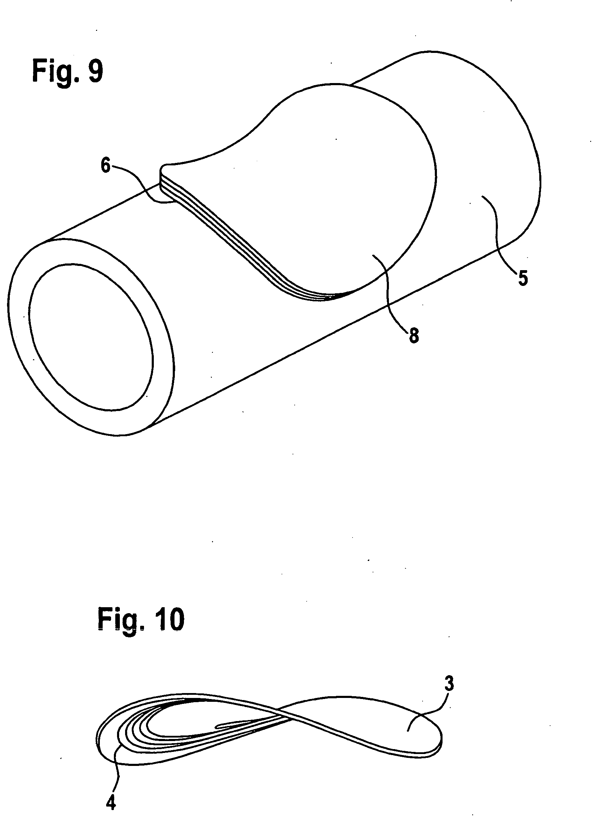

Figur 9 veranschaulicht einen Ausschnitt einer bestehenden Rohrleitung 5 mit einem aufgeschweißten mehrlagigen Kunststoffbauteil mit insgesamt vier Lagen. Das mehrlagige Kunststoffbauteil setzt sich dabei aus abwechselnd angeordneten Heizmatten 6 und Verstärkungsmatten 8 zusammen, wobei die unterste Lage eine Heizmatte 6 ist und eine Verstärkungsmatte 8 das mehrlagige Kunststoffbauteil nach oben abschließt.

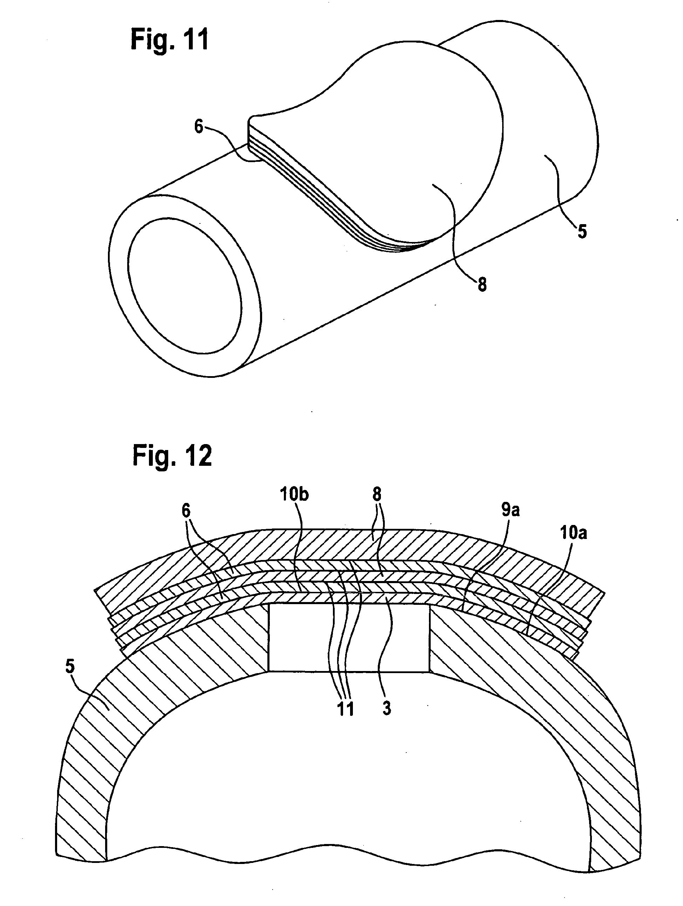

Eine Auflagematte 13 ist in Figur 10 dargestellt. Eine erfindungsgemäße Auflagematte 13 weist an ihrer Unterseite eine Heizeinrichtung 4 auf, hier in Form eines spiralig in die Auflagematte eingebrachten Heizdrahtes. Auflagematten 13 sind als Bestandteil eines mehrlagigen Kunststoffbauteils oder Flickens vielseitig einsetzbar. Eine Einsatzmöglichkeit besteht in der Verwendung der Auflagematte 13 als unterste Lage, direkt auf einem Kunststoffunterbau, was im Falle eines Flickens zweckmäßig ist. Nachfolgende Lagen 6, 8 überlappen in diesem Falle die Auflagematte 13 radial, wie es einer weiteren Darstellung, der Figur 12, zu entnehmen ist. In anderen Anwendungen können Auflagematten 13 aber auch als einzelne Lagen zwischen der oberhalb von Heizmatten 6 oder Verstärkungsmatten 8 eingesetzt sein, in diesem Fall schließen die Auflagematten 13 in der Regel bündig mit den anderen Lagen nach außen ab. Durch den Einsatz von Auflagematten 13 anstelle eines Verstärkungspakets werden ungeradzahlig mehrlagige Kunststoffbauteile verfügbar.

Figur 11 zeigt eine Rohrleitung 5 mit einem Flicken oder einem mehrlagigen Kunststoffbauteil, bestehend aus vier Lagen, jeweils zwei Heizmatten 6 und zwei Verstärkungsmatten 8 mit einer zusätzlichen, nicht sichtbaren Auflagematte, die direkt oberhalb der Rohrleitung 5 angeordnet ist und durch die nachfolgenden Lagen verdeckt ist, wie besser in Figur 12 zu erkennen ist. Die oberste Lage ist eine Verstärkungsmatte 8, die gegenüber den anderen Lagen etwa eine dreifache Dicke aufweist. Prinzipiell können die einzelnen Lagen alle verschiedene Dicken aufweisen.

Figur 12 ist eine Querschnittsansicht der Darstellung von Fig. 11. Eine auf einer Rohrleitung 5 unter Ausbildung einer Schweißzone 9a aufgeschweißte Auflagematte 13 ist mit zwei Verstärkungspaketen, die jeweils aus einer Heizmatte 6 und einer Verstärkungsmatte 8 bestehen, verstärkt. Die unterste Heizmatte 6 bildet dabei Schweißzonen 10a, 10b sowohl direkt mit der Rohrleitung 5 als auch mit der Auflagematte 13 aus. Zwischen den Heizmatten 6 und den Verstärkungsmatten 8 liegen ebenfalls Schweißzonen 11 vor. Die oberste Verstärkungsmatte 8 ist beispielhaft mit einer verdreifachten Dicke dargestellt, es könnten aber auch andere Lagen im Verhältnis dünner oder dicker sein als dargestellt.

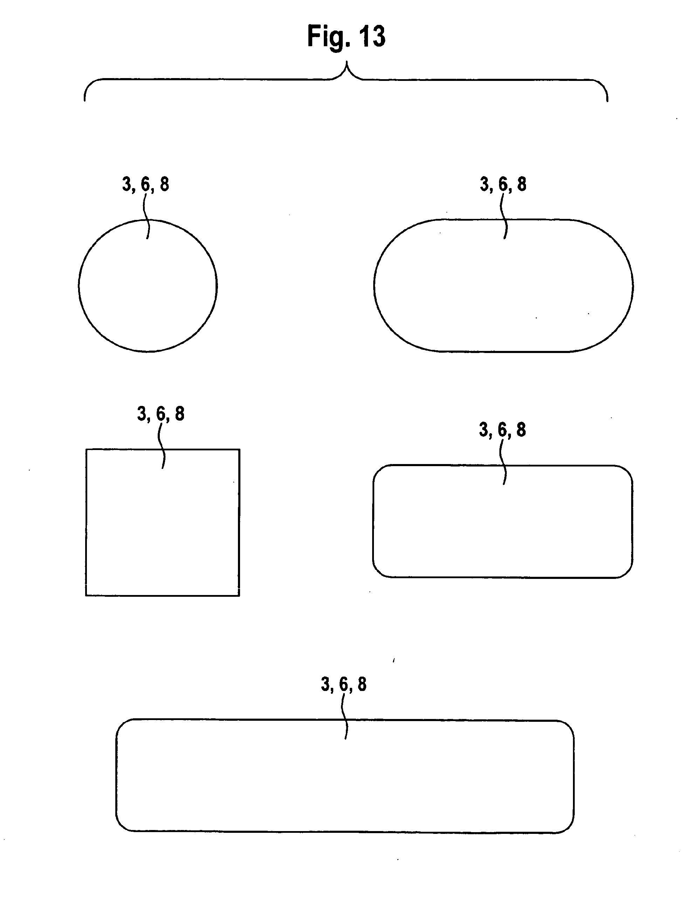

Figur 13 zeigt mehrere Beispiele für die äußere Formgebung der Auflagematten 13, der Heizmatten 6 oder Verstärkungsmatten 8 in Draufsicht. Je nach Anwendung können die Reparaturflicken oder mehrlagigen Kunststoffbauteile oder Verstärkungen von Abzweigsätteln sowie deren einzelne Lagen rund, elliptisch, quadratisch, rechteckig, bandförmig usw. sein, gegebenenfalls sind bei polygonaler Gestaltung die Außenkonturen gerundet.

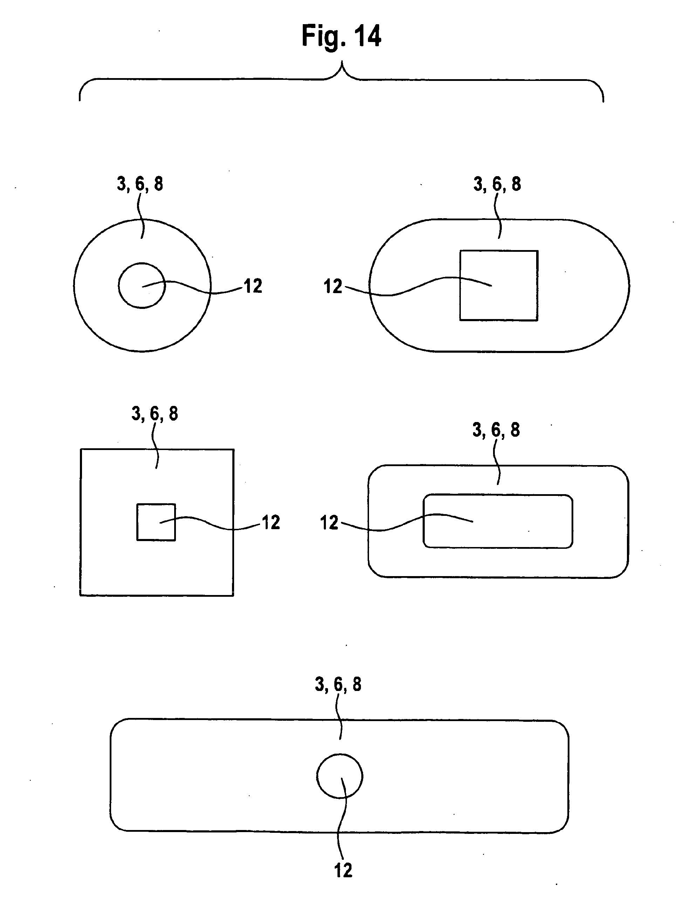

In Figur 14 sind die Auflagematten 13, Heizmatten 6 oder Verstärkungsmatten 8 aus Fig. 13 mit Durchbrüchen 12 dargestellt. Die Gestaltung der Durchbrüche 12 ist ebenfalls völlig frei; die gezeigten Formen sollen lediglich als Beispiele dienen.

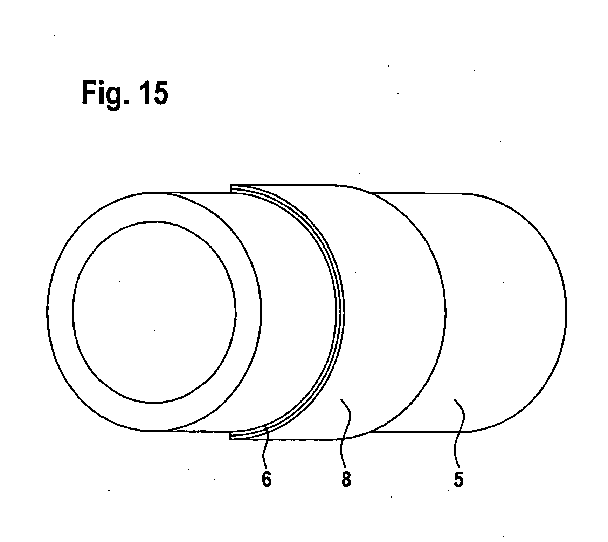

Die Darstellung eines auf einer Rohrleitung 5 aufgeschweißten bandagenförmigen Reparaturflickens gibt die Figur 15 wieder. Der Flicken setzt sich aus einer nicht dargestellten Auflagematte sowie einem aus einer Heizmatte 6 und einer Verstärkungsmatte 8 bestehenden Verstärkungspaket zusammen. Durch die Umklammerung des Verstärkungspakets um die Rohrleitung 5 herum wird der Reparaturflicken zusätzlich gegenüber dem im Inneren der Rohrleitung 5 herrschenden Druck stabilisiert.

## Patentansprüche

1. Mehrlagiges Kunststoffbauteil zum Verstärken eines Kunststoffunterbaus (5), **dadurch gekennzeichnet, dass**
als Lagen mindestens zwei Verstärkungspakete (6, 8) jeweils bestehend aus einer Heizmatte (6) und einer auf dieser liegenden Verstärkungsmatte (8) vorgesehen sind,
wobei die Heizmatte (6) mit einer an ihren beiden Oberflächen wirkenden Heizeinrichtungen (7a, 7b) versehen sind,
die Heizmatte (6) des ersten Verstärkungspakets (6, 8) an einer Oberfläche des mehrlagigen Kunststoffbauteils liegt und beim Verschweißen des Kunststoffbauteils mit einem Kunststoffunterbau (5) Schweißzonen (10a, 10b) sowohl mit dem Kunststoffbauteil (5) als auch mit der zugeordneten Verstärkungsmatte (8) bildet,
bei wenigstens einem zweiten Verstärkungspaket (6, 8) die jeweilige Heizmatte (6) sowohl mit der Verstärkungsmatte (8) des jeweils angrenzenden Verstärkungspakets (6, 8) als auch mit der der jeweiligen Heizmatte (6) zugeordneten Verstärkungsmatte (8) Schweißzonen bildet,
und sämtliche Lagen (6, 8) für sich jeweils flexibel sind.

2. Mehrlagiges Kunststoffbauteil nach Anspruch 1, **dadurch gekennzeichnet, dass** es zusätzlich zumindest eine Auflagematte (3) mit einer an einer ihrer Oberflächen wirkenden Heizeinrichtung (4) aufweist.

3. Mehrlagiges Kunststoffbauteil nach Anspruch 1 oder 2, **dadurch gekennzeichnet, dass** die Heizeinrichtung (4, 7a, 7b) elektrisch oder induktiv beaufschlagbar ist.

4. Mehrlagiges Kunststoffbauteil nach einem der Ansprüche 1 bis 3, **dadurch gekennzeichnet, dass** die Heizeinrichtung ein Heizelement oder ein Heizdraht (7a, 7b) ist.

5. Mehrlagiges Kunststoffbauteil nach einem der Ansprüche 1 bis 3, **dadurch gekennzeichnet, dass** die Heizeinrichtung ein elektrisch leitfähiges thermoplastisches Material ist.

6. Mehrlagiges Kunststoffbauteil nach einem der Ansprüche 1 oder 2, **dadurch gekennzeichnet, dass** die Abmessungen der Lagen (3, 6, 8) aneinander angeglichen sind.

7. Mehrlagiges Kunststoffbauteil nach einem der Ansprüche 1 bis 6, **dadurch gekennzeichnet, dass** die Dicke mindestens einer der Lagen (3, 6, 8) von der Mitte ausgehend nach außen abnimmt.

8. Mehrlagiges Kunststoffbauteil nach einem der Ansprüche 1 bis 5, **dadurch gekennzeichnet, dass** die Dicke mindestens einer der Lagen von der anderer Lagen verschieden ist.

9. Mehrlagiges Kunststoffbauteil nach einem der Anspruche 1 bis 8, **dadurch gekennzeichnet, dass** jede der Lagen (3, 6, 8) einen Durchbruch (12) aufweist.

10. Mehrlagiges Kunststoffbauteil nach einem der Ansprüche 1 bis 9, **dadurch gekennzeichnet, dass** alle Lagen (3, 6, 8) aus thermoplastischem Material, vorzugsweise Polyethylen oder Polypropylen, hergestellt sind.

11. Mehrlagiges Kunststoffbauteil nach einem der Ansprüche 1 bis 10, **dadurch gekennzeichnet, dass** es als eine Bandage oder Klammer um den Kunststoffunterbau (5) angeordnet ist.

12. Mehrlagiges Kunststoffbauteil nach einem der Ansprüche 1 bis 10, **dadurch gekennzeichnet, dass** eine Auflagematte als Auflagefläche (3) eines Sattelbauteils (1) ausgebildet ist.

13. Mehrlagiges Kunststoffbauteil nach Anspruch 12, **dadurch gekennzeichnet, dass** der Außendurchmesser eines Verstärkungspakets (6, 8) oder mehrerer Verstärkungspakete größer ist als der Außendurchmesser der Auflagefläche (3) des Sattelbauteils (1).

14. Mehrlagiges Kunststoffbauteil nach Anspruch 12, **dadurch gekennzeichnet, dass** das Sattelbauteil (1) ein Abzweigsattel ist, dessen Abgangsrohr (2) über den Ansatz der Auflagefläche (3) hinaus verlängert ist.

15. Verfahren zum Montieren eines mehrlagigen Kunststoffbauteils nach Anspruch 1, mit den Schritten:
- Aufspannen mindestens eines Verstärkungspakets bestehend aus zwei für sich jeweils flexiblen Lagen (6, 8) auf einen Kunststoffunterbau (5);
- Verschweißen der Lagen (6, 8) miteinander und mit dem Kunststoffunterbau (5),
wobei jedes Verstärkungspaket aus einer Heizmatte (6) und einer Verstärkungsmatte (8) besteht, und wobei auf das bereits auf dem Kunststoffunterbau (5) verschweißte Verstärkungspaket ein oder mehrere weitere Verstärkungspakete aufgespannt und verschweißt werden.

16. Verfahren nach Anspruch 15, **dadurch gekennzeichnet, dass** vor dem Aufspannen des ersten Verstärkungspakets folgende Schritte ausgeführt werden:
- optionales Ausfräsen eines Loches vorbestimmten Durchmessers in den Kunststoffunterbau (5);
- Aufspannen eines Sattelbauteils (1) auf den Kunststoffunterbau (5);
- Verschweißen der Auflagefläche (3) des Sattelbauteils (1) mit dem Kunststoffunterbau (5);
- Aufstecken eines Verstärkungspakets auf das auf dem Kunststoffunterbau (5) verschweißte Sattelbauteil (1).

17. Verfahren nach Anspruch 16, **dadurch gekennzeichnet, dass** vor dem Aufspannen des Verstärkungspakets folgende Schritte ausgeführt werden:
- Aufspannen einer Auflagematte (3) auf einen Kunststoffunterbau (5);
- Verschweißen der Auflagematte (3) mit dem Kunststoffunterbau (5);
- woraufhin das Verstärkungspaket zumindest mit der Auflagematte (3) verschweißt wird.

18. Verfahren nach einem der Ansprüche 15 bis 17, **dadurch gekennzeichnet, dass** zum Aufspannen ein Druckkissen, ein Spanngurt oder Vakuum verwendet wird.

19. Verfahren nach einem der Ansprüche 15 bis 18, **dadurch gekennzeichnet, dass** als Aufspannhilfe eine Justierbohrung verwendet wird.

20. Verfahren nach einem der Ansprüche 16 bis 19, **dadurch gekennzeichnet, dass** beim Aufspannen das Sattelbauteil (1) als Gegenlager dient.

## Claims

1. A multilayer plastic construction component to reinforce a plastic substructure (5),
**characterized in that**
at least two reinforcing assemblies (6, 8) each consisting of a heating mat (6) and a reinforcing mat (8) lying thereon are provided as plies, wherein the heating mats (6) are provided with heating devices (7a, 7b) operating on both surfaces thereof;
the heating mat (6) of the first reinforcing assembly (6, 8) lies on one surface of the multilayer plastic construction component and forms welding zones (10a, 10b) upon welding of the plastic construction component with a plastic substructure (5) both with the plastic substructure (5) and with the reinforcing mat (8) associated therewith;
for at least one second reinforcing assembly (6, 8), the respective heating mat (6) forms welding zones both with the reinforcing mat (8) of each adjacent reinforcing assembly (6, 8) and with the reinforcing mat (8) associated with the respective heating mat (6); and
all of the plies (6, 8) are flexible per se.

2. A multilayer plastic construction component according to claim 1, **characterized in that** in addition it has at least one support mat (3) with a heating device (4) which operates on one of its surfaces.

3. A multilayer plastic construction component according to claim 1 or claim 2, **characterized in that** the heating device (4, 7a, 7b) is electrically or inductively actuatable.

4. A multilayer plastic construction component according to one of claims 1 to 3, **characterized in that** the heating device is a heating element or a heating wire (7a, 7b).

5. A multilayer plastic construction component according to one of claims 1 to 3, **characterized in that** the heating device is an electrically conducting thermoplastic material.

6. A multilayer plastic construction component according to claim 1 or claim 2, **characterized in that** the dimensions of the plies (3, 6, 8) are adjusted to each other.

7. A multilayer plastic construction component according to one of claims 1 to 6, **characterized in that** the thickness of at least one of the plies (3, 6, 8) decreases from the centre outwards.

8. A multilayer plastic construction component according to one of claims 1 to 5, **characterized in that** the thickness of at least one of the plies differs from the other plies.

9. A multilayer plastic construction component according to one of claims 1 to 8, **characterized in that** each of the plies (3, 6, 8) has an opening (12).

10. A multilayer plastic construction component according to one of claims 1 to 9, **characterized in that** all of the plies (3, 6, 8) are produced from thermoplastic material, preferably polyethylene or polypropylene.

11. A multilayer plastic construction component according to one of claims 1 to 10, **characterized in that** it is arranged about the plastic substructure (5) as a bandage or clamp.

12. A multilayer plastic construction component according to one of claims 1 to 10, **characterized in that** a support mat is formed as a support surface (3) for a saddle component (1).

13. A multilayer plastic construction component according to claim 12, **characterized in that** the external diameter of one or more of the reinforcing assemblies (6, 8) is larger than the external diameter of the support surface (3) of the saddle component (1).

14. A multilayer plastic construction component according to claim 12, **characterized in that** the saddle component (1) is a branch saddle the outlet pipe (2) of which extends beyond the seat of the support surface (3).

15. A method for assembling a multilayer plastic construction component according to claim 1, including the following steps:
• mounting at least one reinforcing assembly, consisting of two plies (6, 8) which are flexible per se, on a plastic substructure (5);
• welding the plies (6, 8) together and with the plastic substructure (5);
wherein each reinforcing assembly consists of a heating mat (6) and a reinforcing mat (8), and wherein one or more further reinforcing assemblies are mounted on and welded to the reinforcing assembly which is already welded onto the plastic substructure (5).

16. A method according to claim 15, **characterized in that** prior to mounting the first reinforcing assembly, the following steps are carried out:
• optionally, a hole with a predetermined diameter is milled in the plastic substructure (5);
• a saddle component (1) is mounted on the plastic substructure (5);
• the support surface (3) of the saddle component (1) is welded with the plastic substructure (5);
• a reinforcing assembly is placed on the saddle component (1) welded to the plastic substructure (5).

17. A method according to claim 16, **characterized in that** prior to mounting the reinforcing assembly, the following steps are carried out:
• a support mat (3) is mounted on a plastic substructure (5);
• the support mat (3) is welded with the plastic substructure (5);
• whereupon the reinforcing assembly is welded at least with the support mat (3).

18. A method according to one of claims 15 to 17, **characterized in that** a pressure pad, clamping belt or vacuum is used for mounting.

19. A method according to one of claims 15 to 18, **characterized in that** an alignment hole is used to aid mounting.

20. A method according to one of claims 16 to 19, **characterized in that** on mounting, the saddle component (1) acts as a heel.

## Revendications

1. Composant multicouche en matière plastique destiné à renforcer une structure sous-jacente en matière plastique (5), **caractérisé en ce que**
au moins deux ensembles de renforcement (6, 8) chacun constitué d'une bague chauffante (6) et d'une bague de renforcement située sur celle-ci (8) sont prévus sous forme de couches, les bagues chauffantes (6) étant munies de moyens de chauffage agissant sur leurs deux surfaces (7a, 7b),
la bague chauffante (6) du premier ensemble de renforcement (6, 8) se trouve sur une surface du composant multicouche en matière plastique et forme des zones de soudage (10a, 10b) aussi bien avec le composant en matière plastique (5) qu'avec la bague de renforcement associée (8) lors du soudage du composant en matière plastique avec une structure sous-jacente en matière plastique (5),
pour au moins un second ensemble de renforcement (6, 8), la bague chauffante respective (6) forme des zones de soudage aussi bien avec la bague de renforcement (8) de l'ensemble de renforcement respectivement contigu (6, 8) qu'avec la bague de renforcement (8) associée à la bague chauffante respective (6), et
toutes les couches (6, 8) sont respectivement souples en elles-mêmes.

2. Composant multicouche en matière plastique selon la revendication 1, **caractérisé en ce qu'**il comporte en outre au moins une bague de support (3) munie de moyens de chauffage (4) agissant sur l'une de ses surfaces.

3. Composant multicouche en matière plastique selon la revendication 1 ou 2, **caractérisé en ce que** les moyens de chauffage (4, 7a, 7b) peuvent être sollicités de manière électrique ou inductive.

4. Composant multicouche en matière plastique selon l'une des revendications 1 à 3, **caractérisé en ce que** les moyens de chauffage sont un élément chauffant ou un fil chauffant (7a, 7b).

5. Composant multicouche en matière plastique selon l'une des revendications 1 à 3, **caractérisé en ce que** les moyens de chauffage sont constitués par une matière thermoplastique électriquement conductrice.

6. Composant multicouche en matière plastique selon l'une des revendications 1 ou 2, **caractérisé en ce que** les dimensions des couches (3, 6, 8) sont adaptées les unes aux autres.

7. Composant multicouche en matière plastique selon l'une des revendications 1 à 6, **caractérisé en ce que** l'épaisseur d'au moins une des couches (3, 6, 8) diminue du centre vers l'extérieur.

8. Composant multicouche en matière plastique selon l'une des revendications 1 à 5, **caractérisé en ce que** l'épaisseur d'au moins une des couches est différente de celle des autres couches.

9. Composant multicouche en matière plastique selon l'une des revendications 1 à 8, **caractérisé en ce que** chacune des couches (3, 6, 8) comporte une ouverture (12).

10. Composant multicouche en matière plastique selon l'une des revendications 1 à 9, **caractérisé en ce que** toutes les couches (3, 6, 8) sont fabriquées en matière thermoplastique, de préférence du polyéthylène ou du polypropylène.

11. Composant multicouche en matière plastique selon l'une des revendications 1 à 10, **caractérisé en ce qu'**il est agencé autour de la structure sous-jacente en matière plastique (5) sous la forme d'un bandage ou d'une agrafe.

12. Composant multicouche en matière plastique selon l'une des revendications 1 à 10, **caractérisé en ce qu'**une bague de support est conçue comme une surface de support (3) d'un composant en forme de selle (1).

13. Composant multicouche en matière plastique selon la revendication 12, **caractérisé en ce que** le diamètre extérieur d'un ensemble de renforcement (6, 8) ou de plusieurs ensembles de renforcement est plus grand que le diamètre extérieur de la surface de support (3) du composant en forme de selle (1).

14. Composant multicouche en matière plastique selon la revendication 12, **caractérisé en ce que** le composant en forme de selle (1) est une selle de dérivation dont le tuyau de départ (2) est prolongé au-delà de la saillie de la surface de support (3).

15. Procédé pour monter un composant multicouche en matière plastique selon la revendication 1, comportant les étapes consistant à :
- fixer au moins un ensemble de renforcement constitué de deux couches respectivement souples en elles-mêmes (6, 8) sur une structure sous-jacente en matière plastique (5),
- souder les couches (6, 8) l'une avec l'autre et avec la structure sous-jacente en matière plastique (5),
dans lequel chaque ensemble de renforcement est formé d'une bague chauffante (6) et d'une bague de renforcement (8), et dans lequel un ou plusieurs ensembles de renforcement supplémentaires sont fixés et soudés sur l'ensemble de renforcement déjà soudé sur la structure sous-jacente en matière plastique (5).

16. Procédé selon la revendication 15, **caractérisé en ce que,** avant la fixation du premier ensemble de renforcement, on exécute les étapes suivantes consistant à :
- fraiser facultativement un trou de diamètre prédéterminé dans la structure sous-jacente en matière plastique (5),
- fixer un composant en forme de selle (1) sur la structure sous-jacente en matière plastique (5),
- souder la surface de support (3) du composant en forme de selle (1) avec la structure sous-jacente en matière plastique (5),
- monter un ensemble de renforcement sur le composant en forme de selle (1) soudé sur la structure sous-jacente en matière plastique (5).

17. Procédé selon la revendication 16, **caractérisé en ce que**, avant la fixation de l'ensemble de renforcement, on exécute les étapes suivantes consistant à :
- fixer une bague de support (3) sur une structure sous-jacente en matière plastique (5),
- souder la bague de support (3) avec la structure sous-jacente en matière plastique (5),
- à la suite de quoi l'ensemble de renforcement est soudé au moins avec la bague de support (3).

18. Procédé selon l'une des revendications 15 à 17, **caractérisé en ce qu'**un tampon de pression, une sangle de tension ou du vide est utilisé pour la fixation.

19. Procédé selon l'une des revendications 15 à 18, **caractérisé en ce qu'**un perçage d'ajustement est utilisé comme aide à la fixation.

20. Procédé selon l'une des revendications 16 à 19, **caractérisé en ce que** le composant en forme de selle (1) sert de butée lors de la fixation.
